# EUROPÄISCHE PATENTSCHRIFT

(11) **EP 3 232 546 B1**
(45) Veröffentlichungstag und Bekanntmachung des Hinweises auf die Patenterteilung: **08.01.2020**
(21) Anmeldenummer: 17163477.7
(22) Anmeldetag: 29.03.2017
(51) Int. Cl.: H02K 11/33, H02K 11/30, H02K 5/22, F04D 25/06, H02K 15/14, H02K 7/14, H02K 5/128, H02K 11/00

(54) **KREISELPUMPENMOTOR**
CENTRIFUGAL PUMP MOTOR
MOTEUR DE POMPE CENTRIFUGE

(30) Priorität: 15.04.2016 DE 102016206402
(43) Veröffentlichungstag der Anmeldung: 18.10.2017
(73) Patentinhaber: Bühler Motor GmbH, 90459 Nürnberg (DE)
(72) Erfinder: EHRSAM, Jürgen, 90766 Fürth (DE); WEISKE, Klaus, 90571 Schwaig (DE); RAUSCH, Harald, 90766 Fürth (DE); STÜCKL, Florian, 90409 Nürnberg (DE); WEISS, Jens, 90762 Fürth (DE)

(56) Entgegenhaltungen:
- EP-A2- 2 199 617
- WO-A1-2015/122069
- JP-A- H10 108 436
- JP-A- 2012 110 165
- US-A1- 2013 088 128

## Beschreibung

Die Erfindung betrifft einen Kreiselpumpenmotor (1), umfassend einen Permanentmagnetrotor (2), einen durch einen Spalttopf (3) vom Permanentmagnetrotor (2) getrennten bewickelten Stator (4), einer Leiterplatte (5), auf welche ein großes elektronisches Bauteil elektrisch angeschlossen ist und einem Motorgehäuse (8) mit einem Steckeranschluss (9). Das große elektronische Bauteil kann ein rundes oder unrundes Bauteil sein, mit einem Durchmesser bzw. einer Dicke/Breite von einem Vielfachen der Leiterplattendicke. Auf der Leiterplatte kann auch mehr als ein großes Bauteil angeschlossen sein.

Bei Verbrennungsmotoren im Kfz-Bereich sind in der Regel von der Kurbelwelle über einen Zahnriemen angetriebene mechanische Kreiselpumpen als Hauptkühlwasserpumpe vorhanden. Als Unterstützung oder ersatzweise bei abgestelltem Verbrennungsmotor kommen elektrische Zusatzkühlwasserpumpen zum Einsatz, die in der Regel als elektronisch kommutierte Gleichstrommotoren ausgebildet sind. Auch Hauptkühlwasserpumpen können elektrisch betrieben sein. Aufgrund beengter Einbauverhältnisse und hoher thermischer Belastungen, sowie der Einsatz im Motorraum, bestehen besonders hohe Anforderungen an die Robustheit, die Entwärmungseigenschaften, sowie einer kompakten Bauraumausnutzung. Gleichfalls werden Kühlwasserpumpen auch bei Hybrid- und Elektrofahrzeugen eingesetzt. Dort vor allem im Kühlkreislauf einer Akkukühlung. Da bei elektronisch kommutierten Gleichstrommotoren in der Regel Leiterplatten mit einer Vielzahl an elektronischen Bauteilen erforderlich sind, ergeben sich häufig Probleme diese auf einer begrenzten Leiterplattenfläche unterzubringen. Weiter sind häufig Steckeranschlüsse vorgesehen, welche erhebliche Kräfte bei der Montage eines Gegensteckers aufnehmen müssen, dies kann bei Steckkontakten, die unmittelbar auf einer Leiterplatte mechanisch und elektrisch festgelegt sind, zu Beschädigungen führen.

Die nächstliegende JP H10 108 436 A offenbart einen Kreiselpumpenmotor umfassend einen Permanentmagnetrotor, einen durch einen Spalttopf vom Permanentmagnetrotor getrennten bewickelten Stator, eine Leiterplatte, auf welcher ein großes elektronisches Bauteil elektrisch angeschlossen ist und ein Motorgehäuse mit einem Steckeranschluss.

Aus der JP 2012 110165 A ist eine elektrische Pumpe mit einer Motorsteuereinheit A, die ein Schaltungsgehäuse 1, eine Leiterplatte 3 und elektrische Bauteile 4 umfasst, einer Motoreinheit B, die an einer Pumpeneinheit 8 montiert ist, und eine Basisplatte 11, bekannt. Die Pumpeneinheit 8, die Motoreinheit B und die Motorsteuereinheit A sind in dieser Reihenfolge angeordnet, wobei ein Leiter an der Basisplatte 11 eingegossen ist und die Basisplatte freiliegende Öffnungsabschnitte 14 aufweist, in denen ein Teil des Leiters 2 parallel zur Plattenoberflächenseite der Basisplatte 11 freigelegt ist und durch Widerstandsschweißen mit den elektrischen Bauteilen 4 verbunden wird. Die Leiterplatte ist an der Innenflächenseite der Basisplatte angebracht und an einem geschlossenen Umfangswandabschnitt 13 der Basisplatte angeordnet, befindet sich in einem Abstand von der Basisplatte und ist mit einem Beschichtungsharz R bedeckt. Der Leiter 2 ist in Kontakt mit der Wärmesenke C. Die Übertragung der Wärme der elektrischen Bauteile der Leiterplatte wird durch die Verdrahtung durch den Leiter 2 unterdrückt. Eine Trennwand 51 aus Harz oder Aluminiumlegierung ist zum Abtrennen der Motoreinheit B und der Motorsteuereinheit A vorgesehen, die als Abdichtfunktion dient.

Die EP 2 199 617 A2 offenbart einen Kreiselpumpenmotor umfassend einen Permanentmagnetrotor, einen durch einen Spalttopf vom Permanentmagnetrotor getrennten bewickelten Stator, einer Leiterplatte, auf welche ein großes elektronisches Bauteil elektrisch angeschlossen ist und einem Motorgehäuse mit einem Steckeranschluss. Das Motorgehäuse weist zumindest eine Ausbuchtung auf, welche an das elektronische Bauteil angepasst ist. Zwischen dem elektronischen Bauteil und der Ausbuchtung ist ein Wärmeleitmittel, z. B. eine Wärmeleitpaste, eingebracht oder kann eingebracht werden.

Die WO 2015/122069 A1 offenbart eine rotierende elektrische Maschine mit einer eingebauten Steuerungseinrichtung, ein elektrisches Servounterstützungs-Lenksystem und ein Verfahren zum Herstellen der rotierenden elektrischen Maschine mit einer eingebauten Steuerungseinrichtung. Sie betrifft insbesondere die Verkleinerung von rotierenden elektrischen Maschinen mit einer eingebauten Steuerungseinrichtung. Die rotierende elektrische Maschine mit einer eingebauten Steuerungseinrichtung umfasst einen Rotor mit einem Permanentmagneten, der auf der Rückseite der Rotorwelle befestigt ist, einen Stator mit einem Statorkern und einer Ankerwicklung, ein Vorderseite-Gehäuse mit einem ersten Lager, das an dem Gehäuse befestigt ist und die Vorderseite der Rotorwelle hält, einen Motorrahmen, der den Rotor und den Stator enthält, einen Kühlkörper, der ein zweites Lager hat und eine Mehrzahl von Schaltelementen montiert, wobei das Lager an dem Kühlkörper montiert ist, ein Steuerungssubstrat (Leiterplatte) das an der Rückseite des Kühlkörpers angeordnet ist und daran montiert einen Rotationssensor, einen Mikrocomputer, eine Treiberschaltung und einen Glättungskondensator, der mit einer Mehrzahl von Schaltungselementen verbunden ist

Aus der US 2013/0088128 A1 ist ein Gerät zur Reduzierung des Temperaturanstiegs auf der Steuerplatine offenbart. Die Vorrichtung enthält ein Schaltelement; eine Spule; einen Glättungskondensator; ein elektrisches Verbindungselement zum elektrischen Verbinden des Schaltelements mit dem Glättungskondensator und der Spule; eine Steuerplatine, auf der ein Steuerelement montiert ist; eine Steuersignalleitung zum elektrischen Verbinden des Schaltelements mit der Steuerplatine; und einen Schaltelementplatzierungsabschnitt zum Platzieren des Schaltelements darauf. Das elektrische Verbindungselement ist zwischen dem Schaltelement und der Steuerplatine angeordnet; der Glättungskondensator und die Spule sind in Bezug auf das elektrische Verbindungselement auf einer Seite des Schaltelements angeordnet; und Endflächen des Glättungskondensators und der Spule sind in Bezug auf das elektrische Verbindungselement von einer Ebene entfernt positioniert, an der das Schaltelement und der Schaltelementplatzierungsabschnitt aneinander angrenzen.

Aufgabe der Erfindung ist es daher bei einem gattungsgemäßen Kreiselpumpenmotor für eine robuste Bauweise zu sorgen, wodurch Beschädigungen bei der Montage und im Betrieb vermieden werden, zudem sollen die elektronischen Bauteile möglichst platzsparend und kompakt anordbar sein, um eine optimale Entwärmung der elektronischen Bauteile zu ermöglichen. Weiter soll eine einfache Herstellbarkeit gegeben sein.

Diese Aufgabe wird erfindungsgemäß durch die Merkmale des Vorrichtungsanspruchs 1 und des Verfahrensanspruchs 19 gelöst.

Durch die Anordnung großer elektronischer Bauteile in einer zweiten Ebene, kann die Leiterplattenfläche unterhalb der genannten Bauteile für kleinere SMD-Bauteile verwendet werden. Dadurch ist eine sehr kompakte Schaltung möglich. Die Aufnahme der Bauteile auf der Trägerplatte erlaubt es eine Druckkraft auf diese Bauteile auszuüben und sie zwischen dem Motorgehäuse und der Trägerplatte einzuklemmen. Dadurch werden der Wärmeübergang und eine kompakte Bauform mit wenigen Hohlräumen begünstigt. Zudem werden die elektrischen Kontakte auf der Leiterplatte hierdurch nicht beschädigt.

Weiterbildungen der Erfindung werden in den Unteransprüchen dargestellt. Eine besonders vorteilhafte Weiterbildung besteht darin, einen Anschlag für zumindest ein Kontaktelement vorzusehen, welches Kontaktelement Montagekräfte aufnehmen muss. In Weiterbildung dieses Gedankens weist das Kontaktelement zwei Abwinkelungsstellen auf, wobei ein Abschnitt zwischen den Abwinkelungsstellen am Anschlag anliegt oder durch Kraftbeaufschlagung auf das Kontaktelement, insbesondere während der Montage eines Gegensteckers, an den Anschlag anlegbar ist. Der Anschlag nimmt die mechanischen Kräfte auf, so dass es zu keiner Beschädigung der elektrischen Verbindung des Kontaktelements mit der Leiterplatte kommen kann.

Ein weiterer wichtiger Aspekt der Erfindung kommt dadurch zum Ausdruck, dass die Trägerplatte zwischen der Leiterplatte und dem Motorgehäuse spielfrei gehalten ist. Hierdurch werden vibrationsbedingte Beschädigungen während des Betriebs verhindert und die Kompaktheit des Aufbaus gefördert. Die Trägerplatte und die Leiterplatte sind dabei zwischen dem Stator und dem Motorgehäuse spielfrei gehalten. Somit ist auch die Leiterplatte entsprechend vibrationssicher und kompakt montiert. Hierzu weist der Stator ein Isolierelement auf, das unmittelbar an der Leiterplatte in achsparalleler Richtung anliegt.

Vorzugsweise liegt dieses Isolierelement an zumindest drei Stellen am Randbereich der Leiterplatte an. Dies ergibt definierte Verhältnisse durch Bildung einer Dreipunktauflage und verhindert toleranzbedingte Vibrationsquellen aufgrund undefinierter Spaltabstände zwischen den Fügepartnern.

Eine besonders bevorzugte Weiterbildung der Erfindung sieht vor, dass das Isolierelement mit dem Motorgehäuse verschweißt ist. Hierdurch kann die Trägerplatte und die Leiterplatte in der durch die Montage eingenommene Zwischenlage definiert dauerhaft fixiert werden.

Die Trägerplatte weist vorzugsweise mehrere am Isolierelement anliegende Vorsprünge auf, welche den Abstand des Stators zur Trägerplatte und zur Leiterplatte definiert. Für eine radiale Begrenzung des Bauraums für die Leiterplatte sind an der Trägerplatte mehrere Aufnahmen vorgesehen. Zudem ist auch der radiale Bauraum des Isolierelements durch die Aufnahmen radial begrenzt.

Die Trägerplatte (10) hat eine Zentrierfunktion für die Leiterplatte (5), welche insbesondere durch Aufnahmen (17) und/oder durch Schaberippen (61) herstellbar ist. Die Leiterplatte wird hierdurch gehalten und eingeklemmt.

Zur Versteifung der Trägerplatte ist ein zumindest teilweise umlaufender Kragen am Rand einer Grundplatte einstückig mit dieser ausgebildet. Zudem sind Versteifungsschrägen vorgesehen, die eine radiale Versteifung des Kragens bewirken.

Zur optimalen Entwärmung und zur sicheren mechanischen Verbindung des elektronischen Bauteils sind Aufnahmegeometrien mit der Trägerplatte einstückig, die vorzugsweise an die Geometrie des elektronischen Bauteils angepasst sind.

Um möglichst kompakt bauen zu können ist für das elektronische Bauteil eine Ausnehmung vorgesehen, welche es diesem erlaubt tiefer in die Trägerplatte einzusinken. Somit ist der axiale Platzbedarf minimiert.

Eine besonders effektive Wärmeabfuhr über das Motorgehäuse wird dadurch begünstigt, indem das Motorgehäuse in seinem Bodenbereich eine Ausbuchtung aufweist, welche an das elektronische Bauteil angepasst ist. Um den Wärmeübergang zu verbessern kann zusätzlich zwischen dem elektronischen Bauteil und der Ausbuchtung ein Wärmeleitmittel, insbesondere eine Wärmeleitpaste, eingebracht sein. Durch den mechanischen Druck, der durch den sandwichartigen Aufbau herstellbar ist, kann das Wärmeleitmittel in alle verbleibenden Lücken eingedrückt werden.

Es kann sowohl ein elektronisches Bauelement als auch mehrere elektronische Bauteile auf der Trägerplatte untergebracht werden und mit entsprechenden Aufnahmegeometrien gehalten werden. Vorzugsweise sind zumindest ein Elektrolytkondensator und eine Drosselspule vorgesehen. Da der Elektrolytkondensator in der Regel einen größeren Durchmesser aufweist ist auch die Ausbauchung am Boden des Motorgehäuses und die Aufnahmegeometrie auf der Trägerplatte entsprechend größer dimensioniert.

Eine zweite Lösung der Aufgabe wird durch den Verfahrensanspruch vorgeschlagen, wonach folgende Montagereihenfolge vorgesehen ist: a) Bereitstellen eines Motorgehäuses (8); b) Bereitstellen einer vormontierten Baugruppe aus dem Stator (4), der Leiterplatte (5) und der Trägerplatte (10); c) Montage der vormontierten Baugruppe in das Motorgehäuse (8); d) Niederhalten der Baugruppe und Verschweißen eines Isolierelements (15) des Stators (4) am Motorgehäuse (8) unter Kraftbeaufschlagung; e) Montage des Spalttopfs (3) und des Permanentmagnetrotors (2); f) Montage Pumpenkopfs (22).

In Weiterbildung dieses Verfahrens wird vorgeschlagen, dass die Verschweißung des Isolierelements am Motorgehäuse mittels Laserdurchstrahlschweißen erfolgt. Dies ist ein bewährtes Verfahren um Kunststoffteile miteinander zu verbinden. Das Gehäusematerial besteht hierzu aus einem für Laserlicht transparenten Material, während das Isolierelement aus einem dasselbe Laserlicht absorbierenden Material besteht. Ein Isolierelement wird über drei Schweißbereiche mit dem Motorgehäuse verschweißt. Ein weiteres Isolierelement wird mit einer weitgehend durchgehenden Schweißnaht mit dem Motorgehäuse verschweißt. Die drei Schweißbereiche sind nachgiebig mit dem Isolierelement verbunden und bieten eine Längenausgleichsmöglichkeit. Das Isolierelement, das nahe der Leiterplatte angeordnet ist, soll eine größere Axialkraft aufnehmen können und wird deshalb über einen großen Umfangsbereich oder vollumfänglich verschweißt. Im Bereich der Schweißverbindung ist der Außendurchmesser des Isolierelements größer als der Innendurchmesser des Motorgehäuses. Hierdurch ergibt sich eine Presspassung zwischen dem Motorgehäuse und dem Isolierelement. Ein von außen auf das Motorgehäuse gerichteter Laserstrahl durchdringt dieses nur geringfügig abgeschwächt und trifft auf den Schweißbereich des Isolierelements, wird dort größtenteils absorbiert und erwärmt somit den Schweißbereich und das angrenzende Motorgehäuse bis das Kunststoffmaterial schmilzt. Durch die Presspassung bewegen sich das Motorgehäuse und das Isolierelement im Schweißbereich geringfügig aufeinander zu und verbinden sich innig miteinander. Um eine gute Schweißverbindung herzustellen muss der gesamte Bereich, in welchem die Schweißpartner aneinander anliegen, erwärmt werden. Hierzu ist die Breite des Schweißbereichs an den Durchmesser des Laserstrahls angepasst.

Ein Ausführungsbeispiel der Erfindung wird nachfolgend anhand der Zeichnung näher erläutert. Es zeigen:
- Fig. 1: eine Schnittansicht eines erfindungsgemäßen Kreiselpumpenmotors,
- Fig. 2: einen vergrößerten Teilausschnitt A aus Fig. 1,
- Fig. 3: eine Vorderansicht auf eine Trägerplatte,
- Fig. 4: ein erster Schnitt A-A durch Fig. 3,
- Fig. 5: ein zweiter Schnitt B-B durch Fig. 3,
- Fig. 6: eine Draufsicht des Trägerplatte,
- Fig. 7: eine Rückansicht der Trägerplatte,
- Fig. 8: eine räumliche Darstellung des Kreiselpumpenmotors,
- Fig. 9: eine Vorderansicht auf eine alternative Trägerplatte,
- Fig. 10: eine räumliche Darstellung der alternativen Trägerplatte,
- Fig. 11: eine Seitenansicht der alternativen Trägerplatte und
- Fig. 12: eine Draufsicht einer alternativen Trägerplatte.

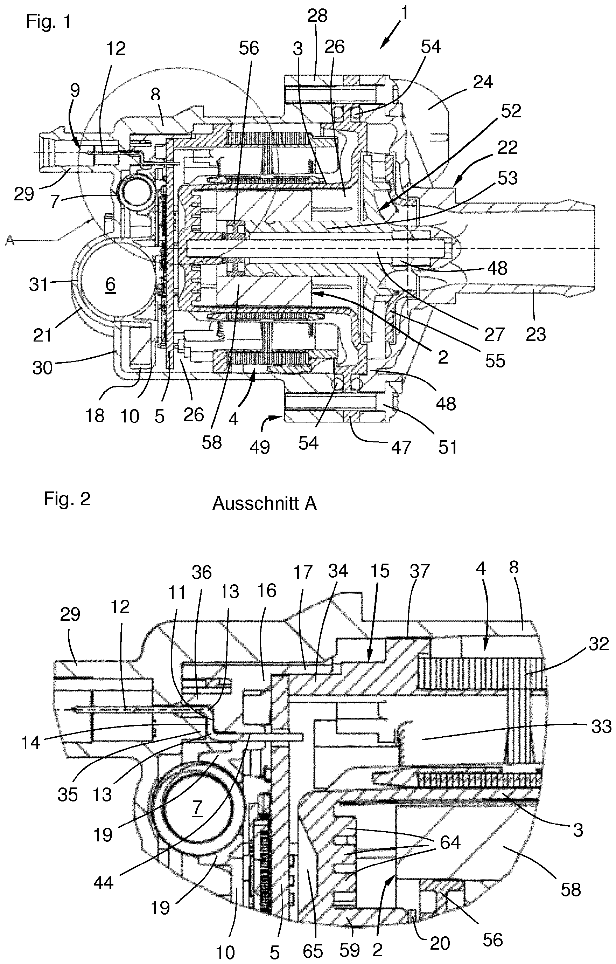

Fig. 1 zeigt eine Schnittansicht eines erfindungsgemäßen Kreiselpumpenmotors 1, mit einem bewickelten Stator 4, einem Permanentmagnetrotor 2, einem Spalttopf 3, einem Pumpenkopf 22, einer Leiterplatte 5, einer Trägerplatte 10 und einem Motorgehäuse 8. Der Stator 4, die Leiterplatte 5 und die Trägerplatte 10 befinden sich in einem Trockenraum 25. Der Permanentmagnetrotor 2 ist in einem Nassraum 26 um eine Achse 27 drehbar gelagert, welche einerseits im Spalttopf 3 und andererseits im Pumpenkopf 22 festgelegt ist. Der Spalttopf 3 weist einen Spalttopfflansch 47 und der Pumpenkopf 22 einen Pumpenkopfflansch 48 auf. Das Motorgehäuse 8 ist topfartig ausgebildet und weist einen Gehäuseflansch 28 und einen Steckerschacht 29 auf. Der Pumpenkopfflansch 48, der Spalttopfflansch 47 und der Gehäuseflansch 28 weisen Anschraubaugen 49 mit Schrauben 51 auf, durch welche der Pumpenkopf 22 und der Spalttopf 3 mit dem Motorgehäuse 8 verschraubt sind. Beiderseits des Spalttopfflanschs 47 sind O-Ringe 54 als Dichtelemente angeordnet. Die Leiterplatte 5 ist mit einer Vielzahl von SMD-Bauteilen bestückt. Größere Bauteile, wie ein Elektrolytkondensator 6 und eine Drosselspule 7 sind auf der Trägerplatte 10 mechanisch gehalten, aber auf der Leiterplatte 5 elektrisch kontaktiert. Die Leiterplatte 5 und die Trägerplatte 10 sind zwischen dem Stator 4 und dem Motorgehäuse 8 axial fixiert. Die Leiterplatte 5 ist zwischen dem Stator 4 und der Trägerplatte 10 axial und radial fixiert. In der Trägerplatte 10 ist ein Kontaktelement 12 mechanisch aufgenommen, welches ebenfalls mit der Leiterplatte 5 elektrisch verbunden ist. Ein Boden 30 des topfartigen Motorgehäuses 8 weist eine Ausbuchtung 21 auf, welche an die Form des Elektrolytkondensators 6 angepasst ist. Zwischen dem Elektrolytkondensator 6 und der Ausbuchtung 21 ist ein Wärmeleitmittel 31 eingebracht. Weiter sind in Fig. 1 ein Pumpenlaufrad 52 dargestellt, welches mit einer Hohlwelle 53 einstückig ist. Das Pumpenlaufrad 52 weist eine Deckscheibe 55 auf. Der Permanentmagnetrotor 2 mit Pumpenlaufrad 52 ist über ein erstes Festlager 56 und ein zweites sphärisches Lager 57 auf der Achse 27 und zwischen dem Pumpenkopf 22 und dem Spalttopf 3 drehbeweglich gelagert. Das Festlager 56 ist zwischen einem um die Hohlwelle 53 gespritzten kunststoffgebundenen Ringmagneten 58 und der Achse 27 angeordnet und lagert das Pumpenlaufrad 52 radial als auch über das Ende der Hohlwelle 53 und einer Anlaufscheibe 20, welche an einer mit dem Spalttopf 3 einstückigen Befestigungshülse 59 anliegt, axial (siehe Fig. 2).

Fig. 2 zeigt einen vergrößerten Teilausschnitt A aus Fig. 1, mit dem Stator 4, dem Motorgehäuse 8, der Leiterplatte 5, der Trägerplatte 10, der Drosselspule 7, welche in einer Aufnahmegeometrie 19 aufgenommen ist, dem Steckerschacht 29, dem Kontaktelement 12, dem Spalttopf 3 und dem Permanentmagnetrotor 2. Der Stator 4 besteht aus einem Blechpaket 32, einem Isolierelement 15 und einer Wicklung 33. Ein vorspringender Bereich 34 des Isolierelements 15 liegt an drei Stellen an der Leiterplatte 5 in deren Randbereich an. Eine Aufnahme 17 der Trägerplatte 10 begrenzt den Einbauraum des Isolierelements 15 im Bereich des vorspringenden Bereichs 34 radial. Gleichfalls wird der Einbauraum der Leiterplatte 5 radial von der Aufnahme 17 der Trägerplatte 10 begrenzt. Das Kontaktelement 12 ist zwischen einem Anschlag 11 der Trägerplatte 10 und einem Gehäusevorsprung 35 im Boden 30 des Motorgehäuses in axialer Richtung formschlüssig gehalten. Zwischen dem Gehäusevorsprung 35 und einer Radialbegrenzung 36 der Trägerplatte 10 ist das Kontaktelement 12 zudem in radialer Richtung gehalten. Das Kontaktelement 12 weist zwei Abwinkelungsstellen 13 auf. Ein Bereich 14 zwischen den Abwinkelungsstellen 13 liegt an dem Anschlag 11 einerseits und an dem Gehäusevorsprung 35 andererseits an. Das Kontaktelement 12 ist in einem Kontaktkanal 44 aufgenommen, welcher die Verbindung mit der Leiterplatte 5 ermöglicht. Der Spalttopf 3 weist in seinem Nassbereich Kühlpins 64 und an seiner Trockenseite Vertiefungen 65 auf, welche mit einem Wärmeleitmittel 31, z. B. einer Wärmeleitpaste, befüllbar sind. Das Motorgehäuse 8, das Isolierelement 15, die Trägerplatte 10, der Spalttopf 3 und der Pumpenkopf 22 bestehen aus einem spritzgusstechnisch verarbeitbaren Kunststoffmaterial. Das Gehäusematerial besteht zudem aus einem für Laserlicht transparenten Material, während das Isolierelement 15 aus einem dasselbe Laserlicht absorbierenden Material besteht. Das Isolierelement 15 ist über drei Schweißbereiche 37 mit dem Motorgehäuse mit Hilfe eines Laserdurchstrahl-Schweißverfahrens verschweißt. Hierzu ist der Außendurchmesser des Isolierelements 15 größer als der Innendurchmesser des Motorgehäuses 8 im Schweißbereich 37. Hierdurch ergibt sich eine Presspassung zwischen dem Motorgehäuse 8 und dem Isolierelement 15. Ein von außen auf das Motorgehäuse 8 gerichteter Laserstrahl durchdringt dieses nur geringfügig abgeschwächt und trifft auf den Schweißbereich 37 des Isolierelements 15, wird dort größtenteils absorbiert und erwärmt somit den Schweißbereich 37 und das angrenzende Motorgehäuse 8 bis das Kunststoffmaterial schmilzt. Durch die Presspassung bewegen sich das Motorgehäuse 8 und das Isolierelement 15 im Schweißbereich 37 geringfügig aufeinander zu und verbinden sich innig miteinander. Um eine gute Schweißverbindung herzustellen muss der gesamte Bereich in welchem die Schweißpartner aneinander anliegen erwärmt werden. Hierzu ist die Breite des Schweißbereichs 37 an den Durchmesser des Laserstrahls angepasst. Weiter sind erkennbar die Befestigungshülse 59, die Anlaufscheibe 20 und der Ringmagnet 58.

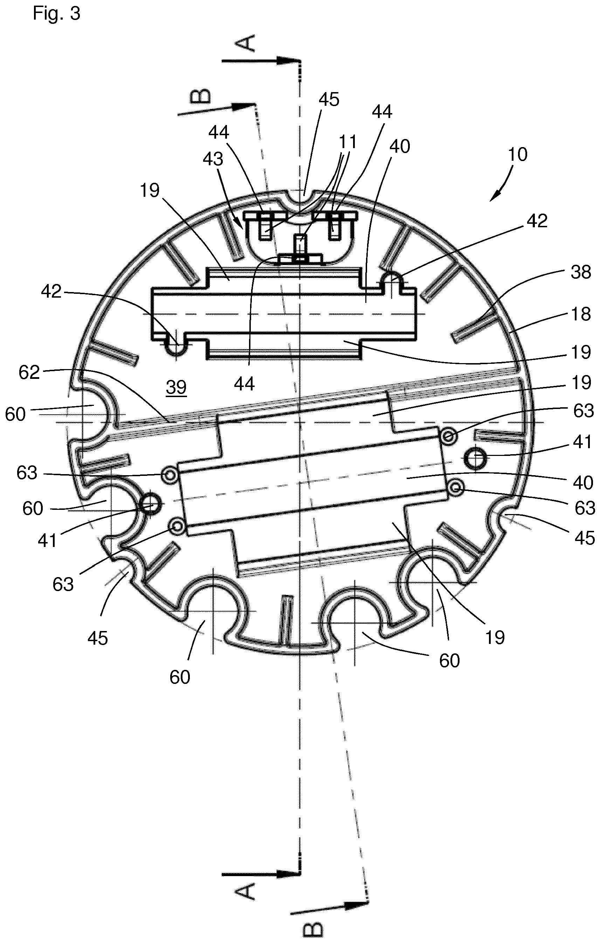

Fig. 3 zeigt die Trägerplatte 10 mit seiner Bestückungsseite. Am Rand weist die Trägerplatte 10 einen Kragen 18 auf, an welche radial nach innen gerichtete Versteifungsschrägen 38 anschließen, welche eine Grundplatte 39 versteifen. Aus der Grundplatte 39 springen Aufnahmegeometrien 19 vor, welche an die zu montierenden Bauteile weitgehend angepasst sind. Innerhalb der Aufnahmegeometrien 19 sind Ausnehmungen 40 vorgesehen, welche eine geringfügige Versenkung der zu montierenden Bauteile ermöglichen und damit Bauraum sparen. Weiter sind mehrere Durchführungen 41 und Erweiterungen 42 der Ausnehmung 40 in der Grundplatte 39 vorhanden, durch welche Anschlussdrähte der zu montierenden Bauteile hindurchgeführt werden können. Die Erweiterungen 42 dienen zur Durchführung der Anschlussdrähte einer Drosselspule 7, daher sind sie auf gegenüberliegenden Seiten der Ausnehmung 40 angeordnet. Auf einem vorspringenden Plateau 43 ist der Anschlag 11 angeordnet, welcher Montagekräfte des Kontaktelements 12 (siehe Fig. 1 und 2) aufnimmt. Hier sind drei Kontaktelemente vorgesehen, die in unterschiedliche Versatzrichtungen montiert sind (Versatz zwischen Steckkontakt-Position und Leiterplattenkontakt-Position). Am äußeren Rand der Trägerplatte 10 sind drei Einbuchtungen 45 eingeformt, die mit entsprechenden Gegenkonturen des Motorgehäuses 8 (Längsrippen) zusammenwirken und für eine Verdrehsicherung der Trägerplatte 10 sorgen.

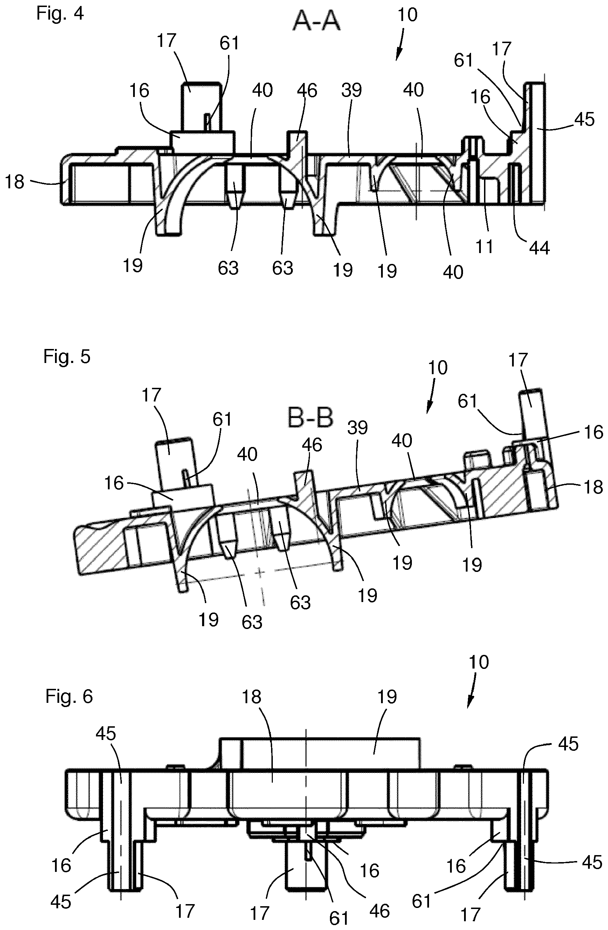

Fig. 4 zeigt einen ersten Schnitt A-A durch die Trägerplatte 10, mit der Grundlatte 39, den Aufnahmen 19, den Durchbrüchen 40, dem Kragen 18, den Vorsprüngen 16, den Aufnahmen 17, dem Anschlag 11, einem Kontaktkanal 44, in welchem ein Kontaktelement 12 montierbar ist. Die Vorsprünge 16 dienen als Anlagefläche für die Leiterplatte 5. Die Aufnahme 17 beschränkt den Aufnahmeraum für die Leiterplatte 5 in radialer Richtung. Ein etwa in der Mitte der Trägerplatte 10 angeordneter Stützzapfen 46 dient als zusätzliche Anlagestelle auf der Leiterplatte 5. Dieser Stützzapfen 46 verhindert, dass sich die Leiterplatte bei der Montage gegen den Druck eines Wärmeleitmittels verbiegt. Der Rücksprung 45 ist im Bereich des Vorsprungs 16 und der Aufnahme 17 vorgesehen. Die Leiterplatte 5 ist ebenfalls mit Rücksprüngen versehen, in welche die Aufnahmen 17 eingreifen. Auf diese Weise ist auch die Leiterplatte 5 verdrehgesichert. Werkzeugausnehmungen 60 am Rand der Trägerplatte 10 dienen als Durchgriff für ein Montagewerkzeug zur Abstützung der Leiterplatte 5. Weiter sind Schaberippen 61 dargestellt, welche als Leiterplattenaufnehme dienen. Diese Schaberippen 61 sind so dimensioniert, dass sie bei Übermaß der Leiterplatte 5 nachgeben oder sich abschaben lassen, so dass eine spielfreie Verbindung ergibt.

Fig. 5 zeigt einen Schnitt B-B durch die Trägerplatte 10, mit der Grundplatte 39, den Aufnahmen 19, den Durchbrüchen 40, dem Kragen 18, den Vorsprüngen 16, den Aufnahmen 17, den Schaberippen 61 und dem Stützzapfen 46.

Fig. 6 zeigt eine Draufsicht der Trägerplatte 10, mit einer Aufnahme 19, dem Kragen 18, den Vorsprüngen 16, den Aufnahmen 17, einer Schaberippe 61 den Rücksprüngen 45 und dem Stützzapfen 46.

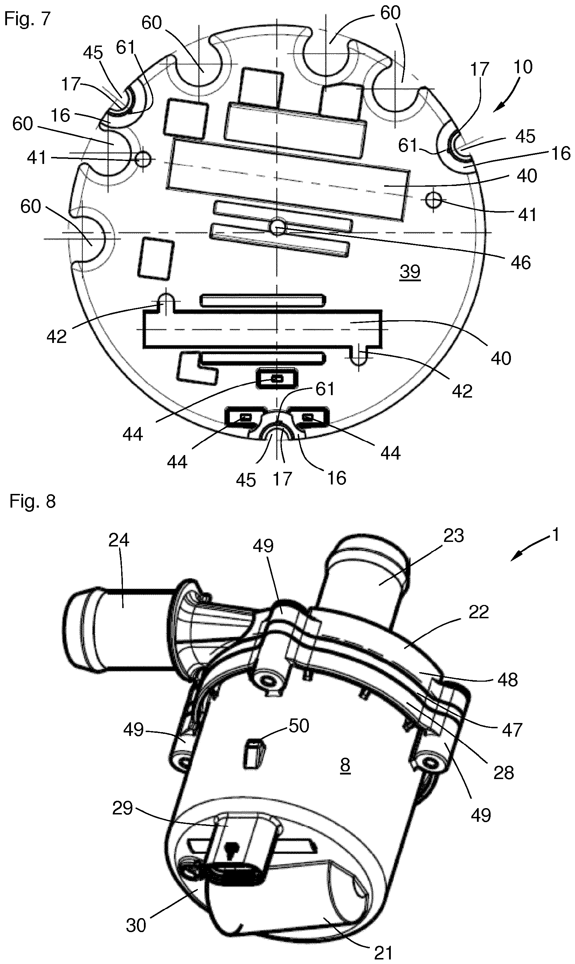

Fig. 7 zeigt eine Rückansicht der Trägerplatte 10, mit der Grundplatte 39, den Ausnehmungen 40, den Durchführungen 41, den Erweiterungen 42, den Vorsprüngen 16, den Aufnahmen 17, den Schaberippen 61, den Rücksprüngen 45, den Werkzeugausnehmungen 60, den Kontaktkanälen 44 zur Aufnahme der Kontaktelemente 12 und dem Stützzapfen 46.

Fig. 8 zeigt eine räumliche Darstellung des Kreiselpumpenmotors 1, mit dem Pumpenkopf 22, mit Saugstutzen 23 und Druckstutzen 24 und einem Pumpenkopfflansch 48, einem mit dem Spalttopf 3 einstückigen Spalttopfflansch 47, dem Motorgehäuse 8 mit dem Gehäuseflansch 28, dem Boden 30, dem Steckerschacht 29 und der Ausbuchtung 21 zur Aufnahme eines Elektrolytkondensators 6. Weiter sind Anschraubaugen 49 zu erkennen, welche im Pumpenkopfflansch 48, dem Spalttopfflansch 47 und dem Gehäuseflansch 28 als Erweiterungen ausgebildet sind und eine Schraubverbindung ermöglichen. Am Motorgehäuse 8 ist eine Axialsicherung 50 ausgebildet, welche dazu dient eine um das Motorgehäuse 8 gelegte ringförmige Befestigungseinrichtung axial zu sichern.

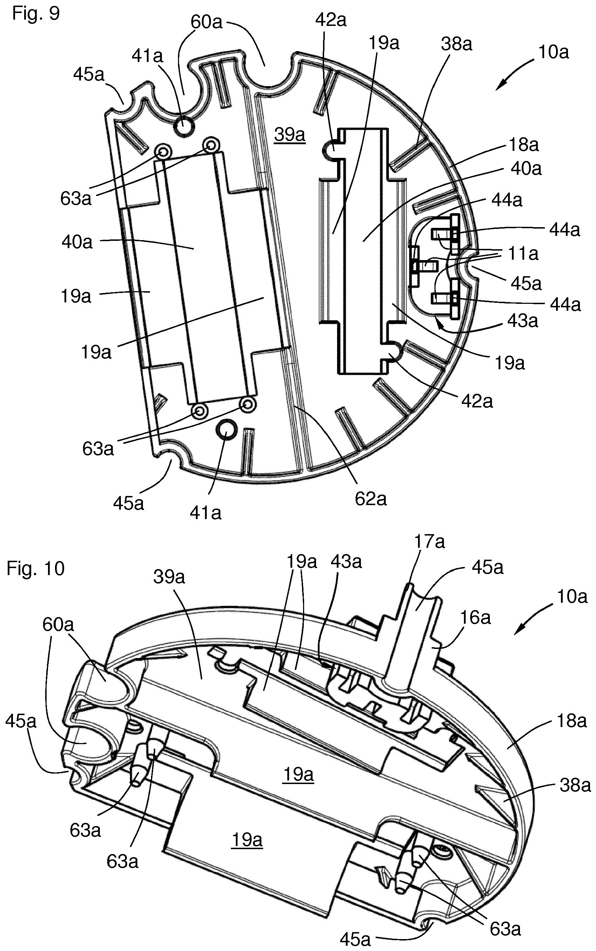

Fig. 9 zeigt eine Vorderansicht einer alternativen Trägerplatte 10a mit seiner Bestückungsseite. Am Rand weist die Trägerplatte 10a einen Kragen 18a auf, an welchen radial nach innen gerichtete Versteifungsschrägen 38a anschließen, welche eine Grundplatte 39a versteifen. Aus der Grundplatte 39a springen Aufnahmegeometrien 19a vor, welche an die zu montierenden Bauteile weitgehend angepasst sind. Innerhalb der Aufnahmegeometrien 19a sind Ausnehmungen 40a vorgesehen, welche eine geringfügige Versenkung der zu montierenden Bauteile ermöglichen und damit Bauraum sparen. Weiter sind mehrere Durchführungen 41 a und Erweiterungen 42a einer der Ausnehmungen 40a in der Grundplatte 39a vorhanden, durch welche Anschlussdrähte der zu montierenden Bauteile hindurchgeführt werden können. Die Erweiterungen 42a dienen zur Durchführung der Anschlussdrähte einer Drosselspule, daher sind sie auf gegenüberliegenden Seiten der Ausnehmung 40a angeordnet. Auf einem vorspringenden Plateau 43a ist ein Anschlag 11a angeordnet, welcher Montagekräfte aufnimmt. Hier können drei Kontaktelemente 12 aufgenommen werden, die in unterschiedliche Versatzrichtungen montierbar sind (Versatz zwischen Steckkontakt-Position und Leiterplattenkontakt-Position). Am äußeren Rand der Trägerplatte 10a sind drei Einbuchtungen 45a eingeformt, die mit entsprechenden Gegenkonturen des Motorgehäuses (Längsrippen) zusammenwirken und für eine Verdrehsicherung der Trägerplatte 10a sorgen. Eine Versteifungswand 62a erhöht die Biegesteifigkeit der Trägerplatte 10a. Der Unterschied zur ersten Ausführungsform ist, dass die Trägerplatte 10a in ihrer Grundform etwa D-förmig ist. Hierdurch sind ungenutzte Bereiche der Trägerplatte 10a ausgespart. Dies vereinfacht das benötigte Spritzgusswerkzeug und verringert die mit dem Spritzgussprozess verbundenen Schwindungsprobleme.

Fig. 10 zeigt eine räumliche Darstellung der alternativen Trägerplatte 10a, mit dem Kragen 18a, der Grundplatte 39a, Versteifungsschrägen 38a zwischen dem Kragen 18a und der Grundplatte 39a, den Aufnahmegeometrien 19a für einen Elektrolytkondensator einerseits und für eine Drosselspule andererseits, Fügehilfen 63a mit kegelförmigen Fasen zur einfacheren Einführung des Elektrolytkondensators, den Werkzeugfreisparungen 60a, Vorsprüngen 16a, Aufnahmen 17a, dem Plateau 43a und den Rücksprüngen 45a.

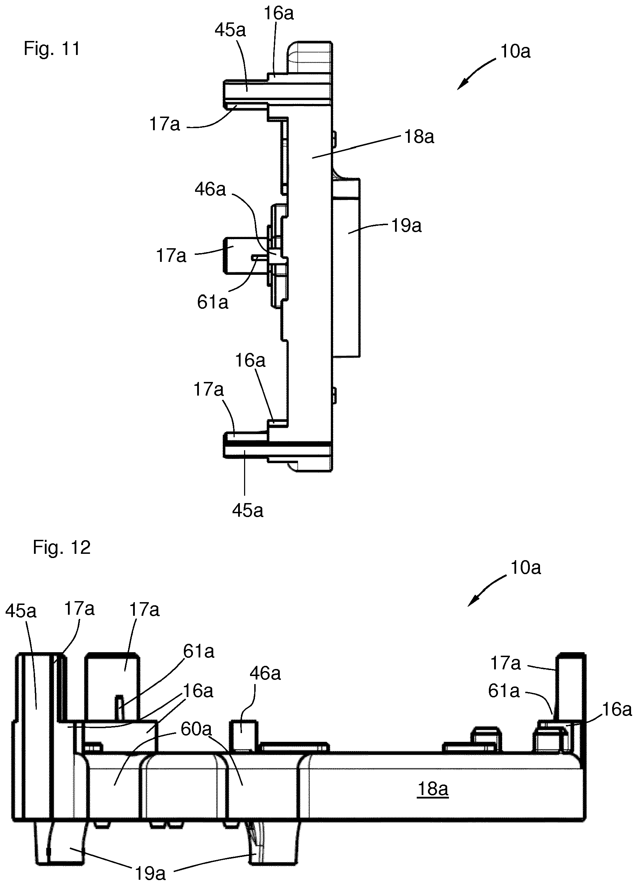

Fig. 11 zeigt eine Seitenansicht der alternativen Trägerplatte 10a, mit dem Kragen 18a, den Vorsprüngen 16a, den Aufnahmen 17a, Schaberippen 61 an den Aufnahmen 17a, welche eine Verjüngung aufweisen, den Rücksprüngen 45a und dem Stützzapfen 46a.

Fig. 12 zeigt eine Draufsicht auf die alternative Trägerplatte 10a, mit dem Kragen 18a, den Aufnahmegeometrien 19a, den Vorsprüngen 16a, den Aufnahmen 17a, den Schaberippen 61a, den Rücksprüngen 45a, den Werkzeugfreisparungen 60a und dem Stützzapfen 46a.

**Bezugszeichenliste**

| | | | |
|---|---|---|---|
| 1 | Kreiselpumpenmotor | 31 | Wärmeleitmittel |
| 2 | Permanentmagnetrotor | 32 | Blechpaket |
| 3 | Spalttopf | 33 | Wicklung |
| 4 | Stator | 34 | vorspringender Bereich |
| 5 | Leiterplatte | 35 | Gehäusevorsprung |
| 6 | Elektrolytkondensator | 36 | Radialbegrenzung |
| 7 | Drosselspule | 37 | Schweißbereich |
| 8 | Motorgehäuse | 38 | Versteifungsschräge |
| 9 | Steckeranschluss | 39 | Grundplatte |
| 10 | Trägerplatte | 40 | Ausnehmung |
| 11 | Anschlag | 41 | Durchführung |
| 12 | Kontaktelement | 42 | Erweiterung |
| 13 | Abwinkelungsstelle | 43 | Plateau |
| 14 | Abschnitt | 44 | Kontaktkanal |
| 15 | Isolierelement | 45 | Rücksprung |
| 16 | Vorsprung | 46 | Stützzapfen |
| 17 | Aufnahme | 47 | Spalttopfflansch |
| 18 | Kragen | 48 | Pumpenkopfflansch |
| 19 | Aufnahmegeometrie | 49 | Anschraubauge |
| 20 | Anlaufscheibe | 50 | Axialsicherung |
| 21 | Ausbuchtung | 51 | Schraube |
| 22 | Pumpenkopf | 52 | Pumpenlaufrad |
| 23 | Saugstutzen | 53 | Hohlwelle |
| 24 | Druckstutzen | 54 | O-Ring |
| 25 | Trockenraum | 55 | Deckscheibe |
| 26 | Nassraum | 56 | Festlager |
| 27 | Achse | 57 | Sphärisches Lager |
| 28 | Gehäuseflansch | 58 | Ringmagnet |
| 29 | Steckerschacht | 59 | Befestigungshülse |
| 30 | Boden | 60 | Werkzeugfreisparung |
| 61 | Schaberippe | | |
| 62 | Versteifungswand | | |
| 63 | Fügehilfe | | |
| 64 | Kühlpins | | |
| 65 | Vertiefung | | |

## Patentansprüche

1. Kreiselpumpenmotor (1), umfassend einen Permanentmagnetrotor (2), einen durch einen Spalttopf (3) vom Permanentmagnetrotor (2) getrennten bewickelten Stator (4), einer Leiterplatte (5), auf welche ein großes elektronisches Bauteil, das einen Durchmesser von einem Vielfachen der Leiterplattendicke umfasst, elektrisch angeschlossen ist und einem Motorgehäuse (8) mit einem Steckeranschluss (9), **dadurch gekennzeichnet, dass** das große elektronische Bauteil mechanisch von einer Trägerplatte (10) gehalten und von der Leiterplatte (5) beabstandet ist, dass die Leiterplatte (5) und die Trägerplatte (10) zwischen dem Stator (4) und dem Motorgehäuse (8) axial fixiert sind, dass die Leiterplatte (5) zwischen dem Stator (4) und der Trägerplatte (10) axial und radial fixiert sind und dass die Trägerplatte (10) und die Leiterplatte (5) unmittelbar durch ein Kontaktelement (12) elektrisch verbunden sind.

2. Kreiselpumpenmotor nach Anspruch 1, **dadurch gekennzeichnet, dass** die Trägerplatte (10) einen Anschlag (11) für ein oder mehrere Kontaktelemente (12) aufweist.

3. Kreiselpumpenmotor nach Anspruch 2, **dadurch gekennzeichnet, dass** zumindest ein Kontaktelement (12) zumindest zwei Abwinkelungsstellen (13) aufweist und ein Abschnitt (14) zwischen den Abwinkelungsstellen (13) am Anschlag (11) anliegt oder durch Kraftbeaufschlagung auf das Kontaktelement (12) an den Anschlag (11) anlegbar ist.

4. Kreiselpumpenmotor nach Anspruch 1, 2 oder 3, **dadurch gekennzeichnet, dass** die Trägerplatte (10) zwischen der Leiterplatte (5) und dem Motorgehäuse (8) spielfrei gehalten ist.

5. Kreiselpumpenmotor nach Anspruch 1, 2, 3 oder 4, **dadurch gekennzeichnet, dass** die Trägerplatte (10) und die Leiterplatte (5) zwischen dem Stator (4) und dem Motorgehäuse (8) spielfrei gehalten sind.

6. Kreiselpumpenmotor nach Anspruch 1, 2, 3, 4 oder 5, **dadurch gekennzeichnet, dass** die Trägerplatte (10) eine Zentrierfunktion für die Leiterplatte (5) hat, welche insbesondere durch Aufnahmen (17) und/oder durch Schaberippen (61) herstellbar ist.

7. Kreiselpumpenmotor nach zumindest einem der vorangehenden Ansprüche, **dadurch gekennzeichnet, dass** der Stator (4) ein Isolierelement (15) aufweist, das unmittelbar an der Leiterplatte (5) in achsparalleler Richtung anliegt.

8. Kreiselpumpenmotor nach Anspruch 7, **dadurch gekennzeichnet, dass** das Isolierelement (15) an zumindest drei Stellen am Randbereich der Leiterplatte (5) anliegt.

9. Kreiselpumpenmotor nach Anspruch 7 oder 8, **dadurch gekennzeichnet, dass** das Isolierelement (15) mit dem Motorgehäuse (8) verschweißt ist.

10. Kreiselpumpenmotor nach Anspruch 7, 8 oder 9, **dadurch gekennzeichnet, dass** die Trägerplatte (10) mehrere am Isolierelement (15) anliegende Vorsprünge (16) aufweist.

11. Kreiselpumpenmotor nach zumindest einem der vorangehenden Ansprüche, **dadurch gekennzeichnet, dass** die Trägerplatte (10) mehrere Aufnahmen (17) umfasst, an welcher der Bauraum der Leiterplatte (5) radial begrenzt ist.

12. Kreiselpumpenmotor nach Anspruch 11, **dadurch gekennzeichnet, dass** der Bauraum des Isolierelements (15) radial durch die Aufnahmen (17) begrenzt ist.

13. Kreiselpumpenmotor nach zumindest einem der vorangehenden Ansprüche, **dadurch gekennzeichnet, dass** die Trägerplatte (10) einen zumindest teilweise umlaufenden Kragen (18) aufweist.

14. Kreiselpumpenmotor nach zumindest einem der vorangehenden Ansprüche, **dadurch gekennzeichnet, dass** die Trägerplatte (10) Aufnahmegeometrien (19) für das elektronische Bauteil oder für mehrere elektronische Bauteile aufweist.

15. Kreiselpumpenmotor nach zumindest einem der vorangehenden Ansprüche, **dadurch gekennzeichnet, dass** die Trägerplatte (10) eine Ausnehmung (40) als Teil der Aufnahmegeometrie aufweist.

16. Kreiselpumpenmotor nach zumindest einem der vorangehenden Ansprüche, **dadurch gekennzeichnet, dass** das Motorgehäuse (8) zumindest eine Ausbuchtung (21) aufweist, welche an das elektronische Bauteil angepasst ist.

17. Kreiselpumpenmotor nach Anspruch 16, **dadurch gekennzeichnet, dass** zwischen dem elektronischen Bauteil und der Ausbuchtung (21) ein Wärmeleitmittel (31), z. B. eine Wärmeleitpaste, eingebracht ist oder eingebracht werden kann.

18. Kreiselpumpenmotor nach zumindest einem der vorangehenden Ansprüche, **dadurch gekennzeichnet, dass** das elektronische Bauteil ein Elektrolytkondensator (6) oder eine Drosselspule (7) ist oder dass mehrere elektronische Bauteile vorgesehen sind, welche zumindest einen Elektrolytkondensator (6) und zumindest eine Drosselspule (7) umfassen.

19. Verfahren zur Montage eines Kreiselpumpenmotors umfassend einen Permanentmagnetrotor (2), einen durch einen Spalttopf (3) vom Permanentmagnetrotor (2) getrennten bewickelten Stator (4), einer Leiterplatte (5), auf welche ein großes elektronisches Bauteil mit einem Durchmesser von einem Vielfachen der Leiterplattendicke elektrisch angeschlossen ist und einem Motorgehäuse (8) mit einem Steckeranschluss (9), einer Leiterplatte (5) und einer Trägerplatte (10), die zwischen dem Stator (4) und dem Motorgehäuse (8) axial fixiert sind, die Leiterplatte (5) zwischen dem Stator (4) und der Trägerplatte (10) axial und radial fixiert ist und die Trägerplatte (10) und die Leiterplatte (5) unmittelbar durch ein Kontaktelement (12) elektrisch verbunden sind, wobei das Verfahren die folgende Verfahrensschritte aufweist: a) Bereitstellen eines Motorgehäuses (8); b) Bereitstellen einer vormontierten Baugruppe aus dem Stator (4), der Leiterplatte (5) und der Trägerplatte (10); c) Montage der vormontierten Baugruppe in das Motorgehäuse (8); d) Niederhalten der Baugruppe und Verschweißen eines Isolierelements (15) des Stators (4) am Motorgehäuse (8) unter Kraftbeaufschlagung; e) Montage des Spalttopfs (3) und des Permanentmagnetrotors (2); f) Montage Pumpenkopfs (22).

20. Verfahren nach Anspruch 19, **dadurch gekennzeichnet, dass** die Verschweißung des Isolierelements (15) am Motorgehäuse (18) mittels LaserDurchstrahl-Schweißen erfolgt.

21. Verfahren nach Anspruch 20, **dadurch gekennzeichnet, dass** die Breite eines Schweißbereichs an den Durchmesser des Laserstrahls angepasst wird.

## Claims

1. A centrifugal pump motor (1) comprising a permanent magnet rotor (2), a wound stator (4), separated from the permanent magnet rotor (2) by a split case (3), a printed circuit board (5), on which a large electronic component comprising a diameter of a multiple of the thickness of the printed circuit board thickness is electrically connected, and a motor housing (8) with a plug-in connection (9), **characterized in that** the large electronic component is held mechanically by a mounting plate (10) and is at a distance from the printed circuit board (5), **in that** the printed circuit board (5) and the mounting plate (10) are axially fixed between the stator (4) and the motor housing (8), **in that** the printed circuit board (5) is fixed axially and radially between the stator (4) and the mounting plate (10) and **in that** the mounting plate (10) and the printed circuit board (5) are electrically connected by a contact element (12) in a direct manner.

2. A centrifugal pump motor according to claim 1, **characterized in that** the mounting plate (10) has a stop (11) for one or a plurality of contact elements (12).

3. A centrifugal pump motor according to claim 2, **characterized in that** at least one contact element (12) has at least two angled sites (13) and a portion (14) between the angled sites (13) rests against the stop (11) or is placeable against the stop (11) by the application of force upon the contact element (12).

4. A centrifugal pump motor according to claim 1, 2 or 3, **characterized in that** the mounting plate (10) is held in a play-free manner between the printed circuit board (5) and the motor housing (8).

5. A centrifugal pump motor according to claim 1, 2, 3 or 4, **characterized in that** the mounting plate (10) and the printed circuit board (5) are held in a play-free manner between the stator (4) and the motor housing (8).

6. A centrifugal pump motor according to claim 1, 2, 3, 4 or 5, **characterized in that** the mounting plate (10) has a centering function for the printed circuit board (5), which centering function can in particular be produced by receivers (17) and/or by scraping ribs (61).

7. A centrifugal pump motor according to at least one of the preceding claims, **characterized in that** the stator (4) has an insulating element (15) which rests against the printed circuit board (5) directly in an axially-parallel direction.

8. A centrifugal pump motor according to claim 7, **characterized in that** the insulating element (15) rests against the edge region of the printed circuit board (5) at at least three sites.

9. A centrifugal pump motor according to claim 7 or 8, **characterized in that** the insulating element (15) is welded to the motor housing (8).

10. A centrifugal pump motor according to claim 7, 8 or 9, **characterized in that** the mounting plate (10) has a plurality of projections (16) resting against the insulating element (15).

11. A centrifugal pump motor according to at least one of the preceding claims, **characterized in that** the mounting plate (10) comprises a plurality of receivers (17) at which the installation space of the printed circuit board (5) is bounded radially.

12. A centrifugal pump motor according to claim 11, **characterized in that** the installation space of the insulating element (15) is bounded radially by the receivers (17).

13. A centrifugal pump motor according to at least one of the preceding claims, **characterized in that** the mounting plate (10) has an at least partially encircling collar (18).

14. A centrifugal pump motor according to at least one of the preceding claims, **characterized in that** the mounting plate (10) has receiving geometries (19) for the electronic component or for a plurality of electronic components.

15. A centrifugal pump motor according to at least one of the preceding claims, **characterized in that** the mounting plate (10) has a recess (40) as part of the receiving geometry.

16. A centrifugal pump motor according to at least one of the preceding claims, **characterised in that** the motor housing (8) has at least one bulge (21), which is matched to the electronic component.

17. A centrifugal pump motor according to claim 16, **characterized in that** a heat-conducting means (31), e.g. a heat-conducting paste, is introduced or can be introduced between the electronic component and the bulge (21).

18. A centrifugal pump motor according to at least one of the preceding claims, **characterized in that** the electronic component is an electrolytic capacitor (6) or a choke coil (7) or **in that** a plurality of electronic components are provided which comprise at least one electrolytic capacitor (6) and at least one choke coil (7).

19. A process for assembling a centrifugal pump motor comprising a permanent magnet rotor (2), a wound stator (4), separated from the permanent magnet rotor (2) by a split case (3), a printed circuit board (5), on which a large electronic component with a diameter of a multiple of the thickness of the printed circuit board is electrically connected, and a motor housing (8) with a plug-in connection (9), a printed circuit board (5) and a mounting plate (10), which are axially fixed between the stator (4) and the motor housing (8), the printed circuit board (5) is axially and radially fixed between the stator (4) and the mounting plate (10) and the mounting plate (10) and the printed circuit board (5) are electrically connected by a contact element (12) in a direct manner, wherein the process has the following process steps:
a) provision of a motor housing (8); b) provision of a pre-assembled unit of the stator (4), the printed circuit board (5) and the mounting plate (10); c) assembling of the pre-assembled unit in the motor housing (8); d) holding down of the unit and welding of an insulating element (15) of the stator (4) to the motor housing (8) accompanied by force action; e) assembling of the split case (3) and the permanent magnet rotor (2); f) assembling of the pump head (22).

20. A process according to claim 19, **characterized in that** the welding of the insulating element (15) to the motor housing (18) takes place by means of laser radiation welding.

21. A process according to claim 20, **characterized in that** the width of a welding region is matched to the diameter of the laser beam.

## Revendications

1. Moteur de pompe centrifuge (1), comprenant un rotor à aimants permanents (2), un stator bobiné (4) séparé du rotor à aimants permanents (2) par une gaine ou un pot d'entrefer (3), une plaque de circuit imprimé (5) sur laquelle est raccordé électriquement un composant électronique de grande taille, qui présente un diamètre égal à un multiple de l'épaisseur de la plaque de circuit imprimé, et un boitier de moteur (8) avec un connecteur de branchement (9),
**caractérisé en ce que** le composant électronique de grande taille est maintenu par une plaque de support (10) et est espacé de la plaque de circuit imprimé (5), **en ce que** la plaque de circuit imprimé (5) et la plaque de support (10) sont fixées axialement entre le stator (4) et le boitier de moteur (8), **en ce que** la plaque de circuit imprimé (5) est fixée axialement et radialement entre le stator (4) et la plaque de support (10), et **en ce que** la plaque de support (10) et la plaque de circuit imprimé (5) sont reliées électriquement de manière directe, par un élément de contact (12).

2. Moteur de pompe centrifuge selon la revendication 1, **caractérisé en ce que** la plaque de support (10) présente une butée (11) pour un ou plusieurs éléments de contact (12) .

3. Moteur de pompe centrifuge selon la revendication 2, **caractérisé en ce qu'**au moins un élément de contact (12) présente au moins deux zones coudées (13), et un tronçon (14) entre les zones coudées (13) s'appuie contre la butée (11) ou bien peut être appliqué contre la butée (11) par une force de sollicitation exercée sur l'élément de contact (12).

4. Moteur de pompe centrifuge selon la revendication 1, 2 ou la revendication 3, **caractérisé en ce que** la plaque de support (10) est maintenue sans jeu entre la plaque de circuit imprimé (5) et le boitier de moteur (8).

5. Moteur de pompe centrifuge selon la revendication 1, 2, 3 ou la revendication 4, **caractérisé en ce que** la plaque de support (10) et la plaque de circuit imprimé (5) sont maintenues sans jeu entre le stator (4) et le boitier de moteur (8).

6. Moteur de pompe centrifuge selon la revendication 1, 2, 3, 4 ou la revendication 5, **caractérisé en ce que** la plaque de support (10) possède une fonction de centrage pour la plaque de circuit imprimé (5), qui peut être établie notamment par des organes d'accueil (17) et/ou des nervures de raclage (61).

7. Moteur de pompe centrifuge selon l'une au moins des revendications précédentes, **caractérisé en ce que** le stator (4) comporte un élément isolant (15), qui s'appuie directement sur la plaque de circuit imprimé (5) selon une direction parallèle à l'axe.

8. Moteur de pompe centrifuge selon la revendication 7, **caractérisé en ce que** l'élément isolant (15) s'appuie au niveau d'au moins trois côtés sur la zone de bordure de la plaque de circuit imprimé (5).

9. Moteur de pompe centrifuge selon la revendication 7 ou la revendication 8, **caractérisé en ce que** l'élément isolant (15) est soudé au boitier de moteur (8).

10. Moteur de pompe centrifuge selon la revendication 7, 8 ou la revendication 9, **caractérisé en ce que** la plaque de support (10) présente plusieurs protubérances (16) s'appuyant sur l'élément isolant (15).

11. Moteur de pompe centrifuge selon l'une au moins des revendications précédentes, **caractérisé en ce que** la plaque de support (10) présente plusieurs organes d'accueil (17), qui limitent radialement l'encombrement de construction de la plaque de circuit imprimé (5).

12. Moteur de pompe centrifuge selon la revendication 11, **caractérisé en ce que** l'encombrement de construction de l'élément isolant (15) est limité radialement par les organes d'accueil (17).

13. Moteur de pompe centrifuge selon l'une au moins des revendications précédentes, **caractérisé en ce que** la plaque de support (10) comporte une collerette (18) au moins partiellement périphérique.

14. Moteur de pompe centrifuge selon l'une au moins des revendications précédentes, **caractérisé en ce que** la plaque de support (10) comporte des éléments géométriques d'accueil (19) pour ledit composant électronique ou pour plusieurs composants électroniques.

15. Moteur de pompe centrifuge selon l'une au moins des revendications précédentes, **caractérisé en ce que** la plaque de support (10) présente un évidement (40) en tant qu'organe géométrique d'accueil.

16. Moteur de pompe centrifuge selon l'une au moins des revendications précédentes, **caractérisé en ce que** le boitier de moteur (8) présente au moins un renflement (21), qui est adapté au composant électronique.

17. Moteur de pompe centrifuge selon la revendication 16, **caractérisé en ce qu'**entre le composant électronique et le renflement (21) est inséré ou peut être inséré un moyen conducteur de la chaleur (31), par exemple une pâte conduisant la chaleur.

18. Moteur de pompe centrifuge selon l'une au moins des revendications précédentes, **caractérisé en ce que** le composant électronique est un condensateur à électrolyte (6) ou une bobine d'arrêt (7), ou **en ce que** sont prévus plusieurs composants électroniques, qui comprennent au moins un condensateur à électrolyte (6) et au moins une bobine d'arrêt (7).

19. Procédé de montage d'un moteur de pompe centrifuge comprenant un rotor à aimants permanents (2), un stator bobiné (4) séparé du rotor à aimants permanents (2) par une gaine ou un pot d'entrefer (3), une plaque de circuit imprimé (5) sur laquelle est raccordé électriquement un composant électronique de grande taille, qui présente un diamètre égal à un multiple de l'épaisseur de la plaque de circuit imprimé, et un boitier de moteur (8) avec un connecteur de branchement (9), moteur dans lequel la plaque de circuit imprimé (5) et une plaque de support (10) sont fixées axialement entre le stator (4) et le boitier de moteur (8), la plaque de circuit imprimé (5) est fixée axialement et radialement entre le stator (4) et la plaque de support (10), et la plaque de support (10) et la plaque de circuit imprimé (5) sont reliées électriquement de manière directe, par un élément de contact (12), le procédé présentant les étapes de procédé suivantes :
a) fourniture d'un boitier de moteur (8) ; b) fourniture d'un sous-groupe prémonté constitué du stator (4), de la plaque de circuit imprimé (5) et de la plaque de support (10) ; c) montage du sous-groupe prémonté dans le boitier de moteur (8) ; d) maintien en position du sous-groupe et soudage d'un élément isolant (15) du stator (4) au boitier de moteur (8) sous sollicitation par une force ; e) montage de la gaine ou du pot d'entrefer (3) et du rotor à aimants permanents (2) ; f) montage de la tête de pompe (2) .

20. Procédé selon la revendication 19, **caractérisé en ce que** le soudage de l'élément isolant (15) sur le boitier de moteur (18) est effectué au moyen d'un soudage par rayon laser traversant.

21. Procédé selon la revendication 20, **caractérisé en ce que** la largeur d'une zone de soudage est adaptée au diamètre du rayon laser.
